# EUROPÄISCHE PATENTSCHRIFT

(11) **EP 1 019 267 B1**
(45) Veröffentlichungstag und Bekanntmachung des Hinweises auf die Patenterteilung: **25.06.2003**
(21) Anmeldenummer: 98958187.1
(22) Anmeldetag: 02.10.1998
(51) Int. Cl.: B60Q 1/14

(54) **VERFAHREN UND ANORDNUNG ZUR ERMITTLUNG DER LICHTVERHÄLTNISSE IN FRONT EINES FAHRZEUGS**
METHOD AND DEVICE FOR DETERMINING THE LIGHT CONDITIONS IN FRONT OF A VEHICLE
PROCEDE ET DISPOSITIF POUR DETERMINER LES CONDITIONS DE LUMINOSITE A L'AVANT D'UN VEHICULE

(30) Priorität: 02.10.1997 DE 19743580
(43) Veröffentlichungstag der Anmeldung: 19.07.2000
(73) Patentinhaber: ROBERT BOSCH GMBH, 70442 Stuttgart (DE)
(72) Erfinder: PÖCHMÜLLER, Werner, D-31139 Hildesheim (DE)
(74) Vertreter: Rach, Werner, Dr.
(86) Internationale Anmeldenummer: DE9802936
(87) Internationale Veröffentlichungsnummer: WO99017954

(56) Entgegenhaltungen:
- WO-A-97/35743
- DE-A- 2 946 561
- FR-A- 2 726 144
- US-A- 4 692 798
- US-A- 4 985 816
- PATENT ABSTRACTS OF JAPAN vol. 010, no. 109 (M-472), 23. April 1986 & JP 60 240545 A (NIPPON DENSO KK), 29. November 1985

## Beschreibung

### Stand der Technik

Die Erfindung betrifft ein Verfahren zur Ermittlung der Lichtverhältnisse in Front eines beweglichen Fahrzeugs, insbesondere vor einem Kraftfahrzeug, nach Anspruch 1 sowie eine entsprechende Vorrichtung nach Anspruch 8.

Bei einer aus der DE 195 23 262 A1 bekannten Einrichtung dieser Art ist zur automatischen Schaltung von Beleuchtungseinrichtungen bei Fahrzeugen eine Sensoreinrichtung und eine Auswerteeinrichtung vorgesehen. Die Sensoreinrichtung weist zumindest einen die allgemeinen Lichtverhältnisse in der Umgebung des Fahrzeuges ungerichtet erfassenden Globalsensor und wenigstens einen gerichtet die Lichtverhältnisse in Fahrtrichtung vor dem Fahrzeug erfassenden Richtungssensor auf. Aus den Signalen des Globalsensors kann durch die Auswerteeinrichtung eine Änderung der allgemeinen Lichtverhältnisse in der Umgebung des Fahrzeugs beispielsweise in der Dämmerung erkannt werden und eine Ein- oder Ausschaltung der Beleuchtungseinrichtungen bewirkt werden. Aus den Signalen des Richtungssensors kann durch die Auswerteeinrichtung ein in Fahrtrichtung vor dem Fahrzeug liegender Tunnel oder eine Unterführung erkannt werden und rechtzeitig vor der Einfahrt in den Tunnel oder die Unterführung eine Einschaltung der Beleuchtungseinrichtungen bewirkt werden.

Nachteilig bei dieser Einrichtung ist die Tatsache, daß bei dieser Einrichtung ein nicht zu vernachlässigender Aufwand durch die getrennten Umgebungs- und Richtungssensoren gegeben ist. Es werden als lichtempfindliche Elemente Photozellen verwendet, denen mit Hilfe von optischen Bündelungseinrichtungen das einfallende Licht zugeführt wird. Dabei treten auch Abhängigkeiten von Blenden und von Belichtungszeiten auf.

Aus der EP 0 736 414 ist es bekannt, ein Fahrzeug mit einer seitlich angebrachten optischen Abtasteinrichtung zu versehen, um den seitlichen Fahrbahnbereich berührungslos abzutasten. Der Abtasteinrichtung ist eine Auswerteeinheit nachgeschaltet. Die optische Abtasteinheit enthält mehrere nebeneinander angeordnete Infrarot-Sendeelemente und ein zugehöriges CCD-Array zur Abtastung der Fahrbahnoberfläche zwecks Erfassung einer Fahrspurbegrenzung. Die Auswerteeinheit ist zur Laufzeitbestimmung, Kontrastbestimmung und Konturenerkennung aus den von der Abtasteinrichtung zugeführten Daten eingerichtet.

Bei der Verwendung von CCD-Sensoren oder auch von linearen CMOS-Sensoren zur Helligkeitsmessung besteht ein wesentlicher Nachteil darin, daß diese in ihrer Helligkeitsdynamik, welche sie erfassen können, beschränkt sind. Daher sind sie mit elektronischen oder mechanischen Belichtungszeitsteuerungen und Blenden versehen. Dadurch kann das am Ausgang des Sensors gemessene Signal nicht zur absoluten Helligkeitsbestimmung herangezogen werden, weil immer die Belichtungszeit bzw. die Blendenstellung zu berücksichtigen ist.

Aus der FR 2 726 144 A ist eine Nachtsichtunterstützung für den Fahrer eines Kraftfahrzeuges bekannt, die aus einer CCD-Kamera und einem Bildschirm besteht. Mit Hilfe der Kamera wird der Straßenabschnitt vor dem eigenen Fahrzeug aufgenommen und zwar sowohl der sichtbare Lichtbereich als auch der Infrarotbereich. Mittels bestimmter Verfahren zur Grauwertumrechnung wird das Kamerabild so aufgearbeitet, dass der Fahrer auf dem Bildschirm die optimale Information erhält. Dies erfolgt beispielsweise durch verschiedene Kontrastanpassungen in hellen oder dunklen Bereichen, im Nah- oder im Fernbereich.

Vorliegende Erfindung verfolgt den Zweck, die Lichtverhältnisse in Front eines beweglichen Fahrzeugs, insbesondere vor einem Kraftfahrzeug, auf wesentlich vereinfachte Weise zu ermitteln, so daß durch geeignete Maßnahmen für die manuelle oder automatische Betätigung der Beleuchtung vor dem beweglichen Fahrzeug situationsgemäß gesorgt werden kann.

### Vorteile der Erfindung

Das erfindungsgemäße Verfahren mit den Merkmalen des Anspruchs 1, hat gegenüber dem bekannten Stand der Technik den entscheidenden Vorteil, daß eine erhebliche Reduzierung des mechanischen und elektrischen Aufwands für die Ermittlung der Lichtverhältnisse in Bewegungsrichtung vor einem bewegten Fahrzeug, wie insbesondere einem Kraftfahrzeug, ermöglicht ist. Dies wird generell bei erheblicher Reduzierung der Kosten des Gesamtsystems erreicht. Durch die geschaffene Möglichkeit der ortsselektiven Helligkeitsmessung ist eine enorme Flexibilität gewonnen.

Gemäß der Erfindung ist bei dem Verfahren zur Ermittlung der Lichtverhältnisse vor einem beweglichen Fahrzeug, insbesondere vor einem Kraftfahrzeug, eine Sensoreinheit, welche den Bereich in Fahrtrichtung vor dem Fahrzeug abtastet, und eine Auswerteeinheit vorgesehen, die aus den von der Sensoreinheit gelieferten Werten sowohl die allgemeinen Lichtverhältnisse als auch auf die Lichtverhältnisse in Fahrtrichtung vor dem Fahrzeug erfaßt, worin die Helligkeitsmessung mit einem flächenhaften Bildsensor durchgeführt wird, und mit Hilfe sektoraler und globaler Auswertung der Helligkeitswerte, die vom Bildsensor in den jeweils entsprechend herangezogenen Abschnitten gemessen werden, ein Aussagewert oder mehrere Aussagewerte über die Lichtverhältnisse generiert wird, und der flächenhafte Bildsensor ein logarithmierender Bildsensor oder ein Bildsensor mit nicht-linearer Wandelkennlinie ist.

Durch die in den weiteren Verfahrensansprüchen niedergelegten Maßnahmen sind vorteilhafte Weiterbildungen und Verbesserungen des im Anspruch 1 angegebenen Verfahrens zur Ermittlung der Lichtverhältnisse vor einem beweglichen Fahrzeug, insbesondere vor einem Kraftfahrzeug, möglich.

Gemäß einer besonders vorteilhaften Ausführungsform des erfindungsgemäßen Verfahrens wird zur flächenhaften Ermittlung der Helligkeit als Bildsensor ein CMOS-Bildsensor verwendet.

Die als zweckmäßig vorgesehene Verwendung eines Bildsensors mit einer nicht-linearen Wandelkennlinie ist von besonderem Vorteil, um die gegebenen, oft recht engen, Strom- bzw. Spannungsbereiche bei der hohen Dynamik des Lichteinfalls so optimal wie möglich zu nutzen.

In weiterer zweckmäßiger Ausgestaltung des erfindungsgemäßen Verfahrens erfolgt die Helligkeitsmessung durch Bildpunkthelligkeitsmittelung in Meßfenstern.

Gemäß einer besonders zweckmäßigen Ausgestaltung der Erfindung ist die Helligkeitsmessung mit einer automatischen Fahrspurverfolgung gekoppelt, um eine gezielte Vermessung der Helligkeit im Verlauf der Fahrspur durchzuführen.

Eine weitere vorteilhafte Ausführungsform sieht eine Objekterkennung vor, so daß beispielsweise dicht vor dem Fahrzeug fahrende große Lastkraftwagen bei der ortsselektiven Helligkeitsmessung berücksichtigt und gegebenenfalls eliminiert werden können.

Gemäß Auspruch 8 ist die erfindungsgemäße Anordnung zur Durchführung des erfindungsgemäßen Verfahrens mit einer Sensoreinheit, welche den Bereich in Fahrtrichtung eines Fahrzeugs abtastet, und mit einer Auswerteeinheit, die aus den von der Sensoreinheit gelieferten Werten sowohl die Lichtverhältnisse in der Umgebung des Fahrzeugs als auch die Lichtverhältnisse in Fahrtrichtung vor dem Fahrzeug erfaßt, versehene, wobei als Sensoreinheit ein flächenhafter Bildsensor vorgesehen ist, auf welchem der vor dem Fahrzeug befindliche Bereich abbildbar bzw. abgebildet ist, wobei als Bildsensor ein logarithmierender Bildsensor oder ein Bildsensor mit nicht-linearer Wandelkennlinie vorgesehen ist und die Auswerteeinheit in sektoraler und globaler Auswertung der Helligkeitswerte, die vom Bildsensor in den jeweils entsprechend herangezogenen Abschnitten gemessenen werden, einen Aussagewert oder mehrere Aussagewerte über die Lichtverhältnisse generiert. In besonders zweckmäßiger weiterer Ausgestaltung dieser Anordnung kann als flächenhafter Bildsensor ein CMOS-Bildsensor vorgesehen sein.

Das erfindungsgemäße Verfahren oder die erfindungsgemäße Anordnung wird besonders bevorzugt verwendet, um den Fahrer eines Fahrzeuges vorausschauend zu warnen und auf die Einschaltung der Fahrzeugbeleuchtung hinzuweisen, oder es bzw. sie wird verwendet, um vorausschauend automatisch die Fahrzeugbeleuchtung zu betätigen, insbesondere ein- und gegebenenfalls auch auszuschalten. Auf diese Weise wird in situationsgemäßer Weise auf Tunnelein- und -ausfahrten bzw. Unterführungen reagiert.

Das erfindungsgemäße Verfahren oder die erfindungsgemäße Anordnung wird weiterhin besonders bevorzugt verwendet, um den Fahrer eines Fahrzeuges auf das Ein- und Ausschalten der Fahrzeugbeleuchtung hinzuweisen, und zwar auf der Basis der mit dem flächenhaften Bildsensor ermittelten Helligkeit, oder es bzw. sie wird verwendet, um automatisch die Fahrzeugbeleuchtung zu betätigen, insbesondere ein- und gegebenenfalls auch auszuschalten, ebenfalls auf der Basis der mit dem flächenhaften Bildsensor ermittelten Helligkeit. Auf diese Weise wird in situationsgemäßer Weise auf globale Helligkeitsveränderungen durch Tag, Nacht, Verdunkelung durch Wolken, Dämmerung, etc. reagiert.

### Zeichnung

Die Erfindung ist anhand von in den Zeichnungen dargestellten Ausführungsbeispielen in der nachfolgenden Beschreibung näher erläutert. Es zeigen
- Fig. 1: schematisch ein Fahrzeug mit einem Bildsensor, der den in Fahrtrichtung vor dem Fahrzeug liegenden Bereich erfaßt;
- Fig. 2: schematisch und skizzenhaft die vor einem Fahrzeug liegende Szene vor der Einfahrt in einen Tunnel, und
- Fig. 3: schematisch eine Blockdarstellung der am Gesamtsystem beteiligten Komponenten.

### Beschreibung der Ausführungsbeispiele

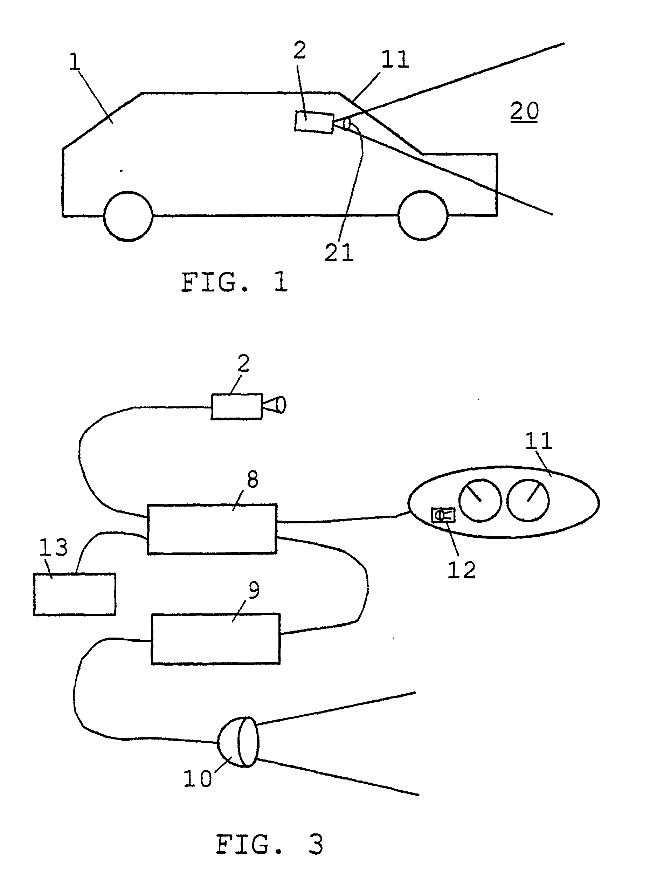

In Fig. 1 ist schematisch ein Fahrzeug 1 mit einem Bildsensor 2 dargestellt, der den in Fahrtrichtung vor dem Fahrzeug liegenden Bereich 20 erfaßt. Die schematische Darstellung in Fig. 1 zeigt einen Querschnitt entlang der Längsachse des Fahrzeugs und einen bevorzugten Platz für die Anbringung des Bildsensors 2. Dies ist in vorteilhafter Weise möglichst hoch hinter der Windschutzscheibe 11 und zwar derart, daß zum einen ein guter Blick auf die Verkehrsszene in Bereich 20 in Fahrtrichtung vor dem Fahrzeug 1 erlaubt ist und zum anderen sich der Bildsensor 2 noch im Wirkbereich der Scheibenwischer befindet. Bevorzugt wird die sich im Bereich 20 in Fahrtrichtung vor dem Fahrzeug 1 befindende Verkehrsszene im Bereich 20 mittels einer Linsenanordnung 21 auf der lichtempfindlichen Fläche des flächigen bzw. flächenhaften Bildsensors 2 abgebildet.

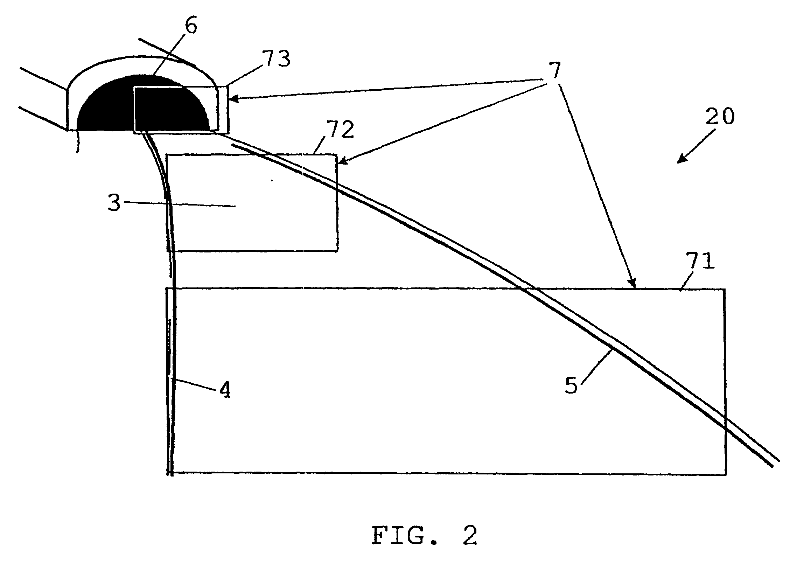

In Fig. 2 ist schematisch und skizzenhaft der Bereich 20, der vor dem Fahrzeug 1 liegt, dargestellt und zwar in einer besonderen Szene vor der Einfahrt in einen Tunnel 6. Die vor dem Fahrzeug liegende Fahrspur ist mit 3 und deren Ränder bzw. Begrenzung mit 4 und 5 bezeichnet. Sie mündet in die rechte Hälfte der Einfahrt in den Tunnel 6. Im Bereich der Tunneleinfahrt wird bei Tag eine nur noch geringe Helligkeit gemessen. Entsprechend einem besonderen Merkmal der Erfindung wird der Bereich 20 vor dem Fahrzeug, und dort insbesondere der Fahrspurverlauf in besondere Meßfelder 7 aufgeteilt, die unterschiedlich plaziert sind. Dies sind beispielsweise ein globales großes Meßfeld 71 nahe vor dem Fahrzeug, ein im wesentlichen auf die Fahrspur 3 gerichtetes Meßfenster 72 in mittlerer Distanz, und ein in größere Entfernung gerichtetes Meßfenster 73, mit dem die Einfahrt zum Tunnel 6 erfaßt wird.

In Fig. 3 ist schematisch eine Blockdarstellung der am Gesamtsystem beteiligten wesentlichen Komponenten wiedergegeben. Das Gesamtsystem kann auf zwei verschiedene Arten verwendet werden. Die eine grundsätzliche Art besteht in der Warnung des Fahrers des Fahrzeuges, um auf die Einschaltung bzw. die Ausschaltung der Fahrzeugbeleuchtung hinzuweisen. Die andere grundsätzlich Art besteht in der automatischen Betätigung der Fahrzeugbeleuchtung, insbesondere um diese ein- und gegebenenfalls auch auszuschalten.

Der Bildsensor 2 liefert Signale über das visuelle Aussehen der Verkehrsszene vor dem Fahrzeug. Diese Signale werden einer geeigneten Auswerteeinheit 8 zugeführt. Diese generiert daraus die für die Fahrerwarnung bzw. Beleuchtungssteuerung benötigten Parameter. Dies können sein: Fahrspurverlauf, Umgebungshelligkeit, Verlauf der Helligkeit entlang der Fahrbahn 3 oder auch Objekte besonderer Art im Fahrbahnverlauf, insbesondere unmittelbar vor dem Fahrzeug 1. Zur Berechnung dieser Parameter werden geeignete Algorithmen und Berechnungsmethoden wie sie in der Bildverarbeitung verwendet werden, eingesetzt. Eines der so berechneten und generierten Signale ist ein Signal zum Ein- bzw. Ausschalten der Fahrzeugbeleuchtung und wird an ein Beleuchtungssteuergerät 9 gegeben. Dieses Beleuchtungssteuergerät 9 schaltet entsprechend dem zugeführten Signal die durch einen Scheinwerfer 10 dargestellte Beleuchtung. Ein anderes der so berechneten und generierten Signale ist ein Signal zum Warnen des Fahrers. Dieses Signal kann alternativ oder auch zusätzlich zum automatischen Schaltsignal generiert werden. Es wird durch dieses Signal eine geeignete Fahrerwarnung bzw. Fahrerinformation über ein Mensch-Maschine-Interface, wie insbesondere ein Armaturenbrett 11 mit Beleuchtungszustandsanzeige 12, hervorgerufen. Dadurch wird der Fahrer darauf hingewiesen, daß er seine Beleuchtung ein- bzw. ausschalten soll. Der Auswerteeinheit 8 können, neben der Bildinformation, für die Bildauswertung zur Helligkeitsbestimmung und gegebenenfalls auch für die Fahrspurerkennung, in zweckmäßiger Weise über andere Sensoren, die allgemein mit 13 bezeichnet sind, Informationssignale zugeführt werden. Diese können beispielsweise Informationen über die Fahrzeuggeschwindigkeit sein.

Erfindungsgemäß wird als Bildsensor 2 ein flächenhafter bzw. flächiger verwendet. Ein solcher flächiger bzw. flächenhafter Bildsensor besteht aus einer Vielzahl nebeneinander in einer Fläche angeordneter einzelner Helligkeitssensoren. Dabei werden bestimmte Punkte der Fahrzeugumgebung, insbesondere im Bereich 20 vor dem Fahrzeug, auf bestimmten Rezeptoren, den einzelnen Helligkeitssensoren des Bildsensors 2 abgebildet, so daß ein bildhafter Eindruck der Fahrzeugumgebung entsteht. Aufgrund des so erzeugten Umgebungsbildes wird die Messung der Helligkeit ermöglicht. Die Gesamthelligkeit der betrachteten Szene wird durch die entsprechende Verarbeitung der Helligkeitssignale der einzelnen Rezeptoren, die innerhalb eines der Meßfenster 71, 72 oder 73 der unterschiedlichen Szenen liegen, bestimmt. In besonders zweckmäßiger Weise kann dabei die Helligkeitsmessung durch Mittelung der Bildpunkthelligkeit, also der Mittelung über die betroffenen Einzelsignale der in dem Meßfenster liegenden Rezeptoren, erfolgen.

In der Auswerteeinheit 8 wird durch Vergleich mit einem Schwellwert entschieden, ob die Helligkeit eine Beleuchtung der Fahrspur durch die Fahrzeugscheinwerfer 10 rechtfertigt oder nicht. Sind die Scheinwerfer 10 nicht eingeschaltet, so kann der Fahrer durch das entsprechende, geeignete Signal darauf hingewiesen werden, daß er sie einschalten sollte. Sind sie hingegen eingeschaltet, so kann der Fahrer durch ein Signal bei entsprechender Helligkeit darauf hingewiesen werden, daß die Fahrzeugbeleuchtung nicht mehr benötigt wird und er die Scheinwerfer 10 ausschalten kann. Zum Vermeiden häufiger gegensätzlicher Hinweise sollte der Entscheidungsschwellwert für die Ein- bzw. Ausschaltung der Beleuchtung eine Hysterese beschreiben.

Im Gegensatz zu einzelnen Helligkeitssensoren wie einem einzelnen Photoelement erlaubt der erfindungsgemäß vorgesehene flächige Bildsensor 2 eine differenzierte und ortsselektive Helligkeitsbestimmung über die gesamte betrachtete Szene. So kann durch Auswerten des Signals bestimmter Bildpunkte die Helligkeit in bestimmten Bildregionen gemessen werden. Ist der Bildsensor wie in Fig. 1 dargestellt angeordnet, so erfaßt er die vor dem Fahrzeug 1 liegende Szene. Insbesondere dann, wenn entsprechend einer vorteilhaften Ausgestaltung der Erfindung der Bildsensor 2 mit einer Fahrspurerkennung kombiniert ist, kann der Fahrverlauf des Fahrzeugs 1 prädiziert werden. In der Darstellung gemäß Fig. 2 ist die gezielte Helligkeitsmessung in Bereichen entlang der gemessenen Fahrspur 3 gezeigt. In vorteilhafter Ausgestaltung wird die Messung von Helligkeiten in bestimmten Bereichen, den Bildfenstern 71, 72 und 73, die entlang der Fahrspur 3 plaziert sind, durchgeführt. Es ist nicht notwendig, daß die Meßfenster rechteckförmig gestaltet sind. Eine vorteilhafte Messung des Helligkeitsverlauf erfolgt durch Mittelung der Bildpunkthelligkeitswerte innerhalb der einzelnen Meßfenster.

So kann beispielsweise eine zu geringe Helligkeit im Meßfenster 73 gemessen werden, das unmittelbar vor der Einfahrt in den Tunnel 6 liegt, wie dies in Fig. 2 dargestellt ist. Es besteht somit die Möglichkeit, den Fahrer vor Einfahrt in den Tunnel 6 aufzufordern, seine Fahrzeugbeleuchtung einzuschalten. Bei entsprechender Ausstattung des Fahrzeugs kann die Fahrzeugbeleuchtung auch automatisch eingeschaltet werden. Der Ausschaltvorgang sollte nicht vorzeitig vorgenommen werden, sondern erst dann, wenn in den Szenenbereichen unmittelbar vor dem Fahrzeug auch eine ausreichende Helligkeit zu messen ist. Zur Verbesserung des Detektionsvorganges können zusätzliche Informationen von Sensoren 13 dienen, die beispielsweise die Fahrzeuggeschwindigkeit angeben. Für die Erkennung globaler Helligkeitzustände, wie sie z.B. durch Tag, Nacht, Dämmerung, Verdunklung durch Wolken oder auch Baumalleen gegeben sind, wird vorteilhaft das große Meßfenster 71 verwendet, das sich über die gesamte Szene ausdehnt.

Erfindungsgemäß wird also die Helligkeitsmessung mit dem flächenhaften bzw. flächigen Bildsensor 2 durchgeführt und mit Hilfe sektoraler und globaler Auswertung der Helligkeitswerte, die vom Bildsensor 2 in den jeweils entsprechend herangezogenen Abschnitten, beispielsweise in den Meßfenstern 71, 72, 73, gemessen werden, wie durch die einzelnen Rezeptoren in den Meßfenstern, wird ein Aussagewert oder mehrere Aussagewerte über die Lichtverhältnisse generiert. Die so geschaffene ortsselektive Helligkeitsmessung bietet eine große Flexibilität.

Die erfindungsgemäße Art der ortsselektiven Helligkeitsmessung läßt sich mittels einer Objektdetektion weiterhin verbessern. Über Bildauswerteverfahren, die mit einer oder zwei gleichzeitig arbeitenden Kameras ausgestattet sind, werden vor dem Fahrzeug sich befindende Objekte detektiert. So ist beispielsweise festzustellen, daß ein großer Lastwagen oder ein sonstiger Personenkraftwagen vor dem eigenen Fahrzeug fährt oder entgegenkommt. Da dieser möglicherweise sehr dunkel oder sehr hell lackiert sein kann, könnte eine globale oder auch sektorale Helligkeitsmessung irritiert werden, insbesondere dann, wenn sich das Objekt in geringer Distanz vor dem eigenen Fahrzeug befindet und den Bereich 20 mehr oder weniger voll ausfüllt und somit fast den gesamten Bildbereich des Bildsensors 2 einnimmt. Mittels der Objektdetektion ist also die Helligkeitsmessung derart zu korrigieren, daß man sich nur auf den Bereich außerhalb des detektierten Objektes beschränkt, und somit Fehlmessungen vermeidet.

Als Bildsensor 2 wird ein CMOS-Bildsensor verwendet. Sehr vorteilhaft ist es, einen logarithmierenden Bildsensor zu verwenden. Ein logarithmischer Verlauf der Lichtintensität-/Strom- bzw. Spannungs-Wandlerkennlinie stellt sicher, daß die Kontrastauflösung über den gesamten Helligkeitsbereich konstant ist. Dadurch vereinfachen sich in der Auswerteeinheit 8 vorzunehmende Operationen der Bildverarbeitung. Ein solcher logarithmierender Bildsensor ist beispielsweise vom Institut für Mikroelektronik Stuttgart (IMS), Allmandring 30a, in D-70569 Stuttgart, entwickelt worden und wird unter der Bezeichnung HDRC2-EC (High-Dynamic-Range CMOS Evaluation Camera) angeboten.

Es ist klar, daß auch andere Bildsensoren mit nicht-linearen, sei es mit exponentiellem oder auch anderem Verlauf, Wandlerkennlinien eingesetzt werden können. Wesentlich ist, bei der Wandlung von Lichtintensität in Strom- bzw. Spannungssignale den dort gegebenen oft recht engen Bereich möglichst optimal zu nutzen. Mit anderen Worten sollte die Steigung der Wandelkennlinie mit steigender Lichtintensität, die auf den Bildsensor auftrifft, abnehmen und somit die Größe der Strom- bzw. Spannungssignale mit zunehmender Lichtintensität immer weniger stark zunehmen. Dies bedeutet, daß im Vergleich zu einer linearen Kennlinie ein größerer Helligkeitsbereich auf einem gleich großen Strom- oder Spannungsbereich abgebildet werden kann. Somit nimmt die Helligkeitsdynamik des Bildsensors zu.

Das Verfahren bzw. die Anordnung gemäß der Erfindung kann dazu verwendet werden, um den Fahrer eines Fahrzeuges vorausschauend zu warnen und auf die Einschaltung der Fahrzeugbeleuchtung hinzuweisen, oder um vorausschauend automatisch die Fahrzeugbeleuchtung zu betätigen, insbesondere ein- und gegebenenfalls auch auszuschalten. Damit ermöglicht es die Erfindung, auf vor dem Fahrzeug auftauchende Tunnel bzw. Unterführungen situationsgerecht zu reagieren.

Alternativ und gegebenenfalls ergänzend kann das Verfahren bzw. die Anordnung gemäß der Erfindung dazu verwendet werden, um den Fahrer eines Fahrzeuges auf das Ein- und Ausschalten der Fahrzeugbeleuchtung hinzuweisen, und zwar auf der Basis der mit dem flächenhaften Bildsensor 2 ermittelten Helligkeit, oder um automatisch die Fahrzeugbeleuchtung zu betätigen, insbesondere ein- und gegebenenfalls auch auszuschalten, ebenfalls auf der Basis der mit dem flächenhaften Bildsensor 2 ermittelten Helligkeit. Damit ermöglicht es die Erfindung, auf die aus verschieden Gründen sich ändernde Helligkeit situationsgerecht zu reagieren.

Der besondere Vorteil der Erfindung besteht in der Ermöglichung der automatischen Messung der Helligkeitsverteilung in Fahrtrichtung. So wird die Messung der Umgebungshelligkeit aber auch die Helligkeit in bestimmten Bereichen der Fahrzeugumgebung ermöglicht. Basierend auf diesen Aussagewerten kann der Fahrer auf die Betätigung der Beleuchtung hingewiesen werden, oder ggf. die Beleuchtung automatisch betätigt werden. In vorteilhafter Weise wird die Helligkeit erfindungsgemäß ortsselektiv gemessen. Insbesondere in Kombination mit einer Fahrspurverlaufserkennung und/oder einer Objektdetektion läßt sich vorausschauend der Helligkeitsverlauf auf der Fahrspur ermitteln. Damit können im Fahrverlauf auftauchende Tunneleinfahrten und Unterführungen frühzeitig berücksichtigt werden.

## Patentansprüche

1. Verfahren zur Ermittlung der Lichtverhältnisse in Front eines beweglichen Fahrzeugs, insbesondere vor einem Kraftfahrzeug, wobei eine Sensoreinheit vorgesehen ist, welche den Bereich in Fahrtrichtung vor dem Fahrzeug abtastet, und wobei eine Auswerteeinheit vorgesehen ist, die aus den von der Sensoreinheit gelieferten Werten sowohl die Lichtverhältnisse in der Umgebung des Fahrzeugs als auch die Lichtverhältnisse in Fahrtrichtung vor dem Fahrzeug erfaßt,
worin
die Helligkeitsmessung mit einem flächenhaften Bildsensor durchgeführt wird, und mit Hilfe sektoraler und globaler Auswertung der Helligkeitswerte, die vom Bildsensor in den jeweils entsprechend herangezogenen Abschnitten gemessen werden, ein Aussagewert oder mehrere Aussagewerte über die Lichtverhältnisse generiert wird, und
der flächenhafte Bildsensor ein logarithmierender Bildsensor oder ein Bildsensor mit nicht-linearer Wandelkennlinie ist.

2. Verfahren nach Anspruch 1, wobei zur flächenhaften Ermittlung der Helligkeit als Bildsensor ein CMOS-Bildsensor verwendet wird.

3. Verfahren nach Anspruch 1 oder 2, wobei die Helligkeitsmessung durch Bildpunkthelligkeitsmittelung in Meßfenstern erfolgt.

4. Verfahren nach Anspruch 1, 2 oder 3, wobei die Helligkeitsmessung mit einer automatischen Fahrspurverfolgung gekoppelt ist, um eine gezielte Vermessung der Helligkeit im Verlauf der Fahrspur durchzuführen.

5. Verfahren nach einem der vorigen Ansprüche, wobei die Helligkeitsmessung mit einer Objekterkennung gekoppelt ist, um besondere Objekte, insbesondere Lastkraftwagen, im Fahrspurverlauf zu erkennen und bei der Helligkeitsmessung zu berücksichtigen.

6. Verfahren nach einem der Ansprüche 1 bis 5, wobei das Verfahren verwendet wird, um den Fahrer eines Fahrzeuges (1) vorausschauend zu warnen und auf die Einschaltung der Fahrzeugbeleuchtung (9, 10) hinzuweisen (11, 12), oder das Verfahren verwendet wird, um vorausschauend automatisch die Fahrzeugbeleuchtung (9, 10) zu betätigen, insbesondere ein- und gegebenenfalls auch auszuschalten.

7. Verfahren nach einem der Ansprüche 1 bis 5, wobei das Verfahren verwendet wird, um den Fahrer eines Fahrzeuges (1) auf das Ein- und Ausschalten der Fahrzeugbeleuchtung (9, 10) hinzuweisen, und zwar auf der Basis der mit dem flächenhaften Bildsensor (2) ermittelten Helligkeit, oder das Verfahren verwendet wird, um automatisch die Fahrzeugbeleuchtung (9, 10) zu betätigen, insbesondere einund gegebenenfalls auch auszuschalten, ebenfalls auf der Basis der mit dem flächenhaften Bildsensor (2) ermittelten Helligkeit.

8. Anordnung zur Durchführung des Verfahrens nach Anspruch 1 oder einem der Ansprüche 2 bis 7, mit einer Sensoreinheit, welche so eingerichtet ist, daß sie den Bereich in Fahrtrichtung eines Fahrzeugs abtastet, und mit einer Auswerteeinheit, die so eingerichtet ist, daß sie aus den von der Sensoreinheit gelieferten Werten sowohl die Lichtverhältnisse in der Umgebung des Fahrzeugs als auch die Lichtverhältnisse in Fahrtrichtung vor dem Fahrzeug erfaßt,
wobei
als Sensoreinheit ein flächenhafter Bildsensor (2) vorgesehen ist, auf welchem der vor dem Fahrzeug (1) befindliche Bereich (20) abbildbar bzw. abgebildet ist, wobei als Bildsensor (2) ein logarithmierender Bildsensor oder ein Bildsensor (2) mit nicht-linearer Wandelkennlinie vorgesehen ist und wobei die Auswerteeinheit (8) so eingerischtet ist, daß sie in sektoraler und globaler Auswertung der Helligkeitswerte, die vom Bildsensor (2) in den jeweils entsprechend herangezogenen Abschnitten gemessen werden, einen Aussagewert oder mehrere Aussagewerte über die Lichtverhältnisse generiert.

9. Anordnung nach Anspruch 8, wobei als flächenhafter Bildsensor (2) ein CMOS-Bildsensor vorgesehen ist.

10. Anordnung nach einem der Ansprüche 8 oder 9, wobei die Anordnung so eingerichtet ist, daß sie mittels der Auswerteeinheit (8) den Fahrer eines Fahrzeuges (1) vorausschauend warnt und auf die Einschaltung der Fahrzeugbeleuchtung (9, 10) hinweist (11, 12), oder daß sie mittels der Auswerteeinheit (8) vorausschauend automatisch die Fahrzeugbeleuchtung (9, 10) betätigt, insbesondere ein- und gegebenenfalls auch ausschaltet.

11. Anordnung nach einem der Ansprüche 8 oder 9 wobei die Anordnung to eingerichtet ist daß sie mittels der Auswerteeinheit (8) den Fahrer eines Fahrzeuges (1) auf das Ein- und Ausschalten der Fahrzeugbeleuchtung (9, 10) hinweist, und zwar auf der Basis der mit dem flächenhaften Bildsensor (2) ermittelten Helligkeit, oder daß sie mittels der Auswerteeinheit (8) automatisch die Fahrzeugbeleuchtung (9, 10) betätigt, insbesondere ein- und gegebenenfalls auch ausschaltet, ebenfalls auf der Basis der mit dem flächenhaften Bildsensor (2) ermittelten Helligkeit.

## Claims

1. Method for determining the light conditions in front of a moving vehicle, in particular in front of a motor vehicle, a sensor unit being provided which scans the area in front of the vehicle in the driving direction, and there being provided an evaluation unit which uses the values supplied by the sensor unit to detect both the light conditions in the surroundings of the vehicle and the light conditions in front of the vehicle in the driving direction, in which the brightness measurement is carried out using a planar image sensor, and an informative value or a plurality of informative values relating to the light conditions is/are generated with the aid of sectorial and global evaluation of the brightness values which are measured by the image sensor in the sections respectively appropriately used, and the planar image sensor is a logarithmic image sensor or an image sensor with a non-linear conversion characteristic.

2. Method according to Claim 1, in which a CMOS image sensor is used as image sensor for planar detection of brightness.

3. Method according to Claim 1 or 2, in which the brightness measurement is performed by determining pixel brightness in measurement windows.

4. Method according to Claim 1, 2 or 3, in which the brightness measurement is coupled with automatic tracking of the lane in order to carry out a specific measurement of the brightness in the course of the lane.

5. Method according to one of the preceding claims, in which the brightness measurement is coupled with object detection in order to detect special objects, in particular lorries, in the course of the lane, and in order to take them into account in the brightness measurement.

6. Method according to one of Claims 1 to 5, in which the method is used in order to warn the driver of a vehicle (1) in advance and to advise (11, 12) switching on the vehicle illumination (9, 10), or the method is used in order to actuate the vehicle illumination (9, 10) automatically in advance, in particular to switch it on and, if appropriate, also to switch off.

7. Method according to one of Claims 1 to 5, in which the method is used in order to advise the driver of a vehicle (1) to switch the vehicle illumination (9, 10) on and off, specifically on the basis of the brightness determined using the planar image sensor (2), or the method is used in order to actuate the vehicle illumination (9, 10) automatically, in particular to switch it on and, if appropriate, also to switch it off, likewise on the basis of the brightness determined using the planar image sensor (2).

8. Arrangement for carrying out the method according to Claim 1 or one of Claims 2 to 7, having a sensor unit which is set up in such a way that it scans the area in the driving direction of a vehicle, and having an evaluation unit which is set up in such a way that it uses the values supplied by the sensor unit to detect both the lighting conditions in the surroundings of the vehicle and the lighting conditions in front of the vehicle in the driving direction, in which provided as sensor unit is a planar image sensor (2) on which the area (20) located in front of the vehicle (1) can be imaged and/or is imaged, there being provided as image sensor (2) a logarithmication image sensor or an image sensor (2) with a non-linear conversion characteristic, and the evaluation unit (8) being set up in such a way that it generates an informative value or a plurality of informative values relating to the light conditions by sectorial and global evaluation of the brightness values which are measured by the image sensor (2) in the sections respectively appropriately used.

9. Arrangement according to Claim 8, in which a CMOS image sensor is provided as planar image sensor (2).

10. Arrangement according to one of Claims 8 or 9, in which the arrangement is set up in such a way that it uses the evaluation unit (8) to warn the driver of a vehicle (1) in advance and to advise (11, 12) switching on the vehicle illumination (9, 10), or that it uses the evaluation unit (8) automatically to actuate the vehicle illumination (9, 10) in advance, in particular to switch it on and, if appropriate, also to switch it off.

11. Arrangement according to one of Claims 8 or 9, in which the arrangement is set up in such a way that it uses the evaluation unit (8) to advise the driver of a vehicle (1) to switch the vehicle illumination (9, 10) on and off, specifically on the basis of the brightness determined using the planar image sensor (2), or that it uses the evaluation unit (8) automatically to actuate the vehicle illumination (9, 10), in particular to switch it on and, if appropriate, also to switch it off, likewise on the basis of the brightness determined using the planar image sensor (2).

## Revendications

1. Procédé pour déterminer les conditions lumineuses à l'avant d'un véhicule mobile, en particulier devant un véhicule automobile, pour lequel on prévoit une unité de capteurs qui balaie la zone devant le véhicule en direction de circulation et une unité d'interprétation qui, à partir des valeurs fournies par l'unité de capteurs, enregistre aussi bien les conditions lumineuses dans l'environnement du véhicule que les conditions lumineuses en direction de conduite devant le véhicule selon lequel
la mesure de la luminosité est réalisée avec un capteur d'images en deux dimensions, et une exploitation sectorielle et globale des valeurs de luminosité mesurées par le capteur d'images dans des segments à chaque fois sollicités de façon correspondante, une genèse ou plusieurs valeurs représentatives des conditions lumineuses, et
le capteur d'images en deux dimensions est un capteur d'images logarithmique ou un capteur d'images avec des caractéristiques de transformation non linéaires.

2. Procédé selon la revendication 1,
pour lequel
on utilise en tant que capteur d'images un capteur d'images CMOS afin de déterminer en deux dimensions la luminosité.

3. Procédé selon la revendication 1 ou 2,
pour lequel
la mesure de la luminosité est réalisée en calculant la moyenne de luminosité de pixels dans des fenêtres de mesure.

4. Procédé selon la revendication 1, 2 ou 3,
pour lequel
la mesure de la luminosité est couplée avec un suivi automatique de la voie de circulation afin de réaliser une mesure ciblée de la luminosité sur le tracé de la voie de circulation.

5. Procédé selon l'une des revendications précédentes,
pour lequel
la mesure de la luminosité est couplée à une reconnaissance d'objets afin de reconnaître des objets particuliers, notamment des véhicules utilitaires, sur le tracé de la voie de circulation et d'en tenir compte lors de la mesure de la luminosité.

6. Procédé selon l'une des revendications 1 à 5,
pour lequel
on utilise le procédé pour avertir à l'avance le conducteur d'un véhicule (1) et lui indiquer la mise en marche de l'éclairage du véhicule (9, 10) ou on utilise le procédé pour commander automatiquement à l'avance l'éclairage du véhicule (9, 10), en particulier pour le mettre en marche et éventuellement aussi l'arrêter.

7. Procédé selon l'une des revendications 1 à 5,
pour lequel
on utilise le procédé pour indiquer au conducteur d'un véhicule (1) que l'éclairage du véhicule (9, 10) est mis en marche et arrêté et cela sur la base de la luminosité déterminée par le capteur d'images (2) en deux dimensions, ou on utilise le procédé pour commander automatiquement l'éclairage du véhicule (9, 10), en particulier pour le mettre en marche et éventuellement aussi l'arrêter, également sur la base de la luminosité déterminée par le capteur d'images (2) en deux dimensions.

8. Dispositif pour exécuter le procédé selon la revendication 1 ou selon l'une des revendications 2 à 7 avec une unité de capteurs qui est conçue de telle manière qu'elle balaie la zone en direction de circulation d'un véhicule et avec une unité d'exploitation qui est conçue de telle manière qu'elle enregistre, à partir des valeurs fournies par l'unité de capteurs, aussi bien les conditions lumineuses dans l'environnement du véhicule que les conditions lumineuses en direction de conduite devant le véhicule,
pour lequel
on prévoit en tant qu'unité de capteurs un capteur d'images (2) en deux dimensions sur lequel la zone (20) située devant le véhicule (1) peut être reproduite ou est reproduite, on prévoit en tant que capteur d'images (2) un capteur d'images logarithmique ou un capteur d'images avec des caractéristique de transformation non linéaires, et pour lequel l'unité d'exploitation (8) est conçue de telle manière qu'elle génère une valeur ou plusieurs valeurs représentatives des conditions lumineuses selon une exploitation sectorielle et globale des valeurs de luminosité mesurées par le capteur d'images (2) dans des segments à chaque fois sollicités de façon correspondante.

9. Dispositif selon la revendication 8,
pour lequel
on prévoit en tant que capteur d'images (2) en deux dimensions un capteur d'images CMOS.

10. Dispositif selon l'une des revendications 8 ou 9,
pour lequel
il est conçu pour avertir à l'avance le conducteur d'un véhicule (1) à l'aide de l'unité d'interprétation (8) et lui indiquer (11, 12) la mise en marche de l'éclairage du véhicule (9, 10), ou il commande automatiquement à l'avance l'éclairage du véhicule (9, 10) à l'aide de l'unité d'exploitation (8), en particulier pour le mettre en marche et éventuellement aussi l'arrêter.

11. Dispositif selon l'une des revendications 8 ou 9,
pour lequel
il est conçu pour indiquer à l'aide de l'unité d'interprétation (8) au conducteur d'un véhicule (1) que l'éclairage du véhicule (9, 10) est mis en marche et arrêté, et cela sur la base de la luminosité déterminée par le capteur d'images (2) en deux dimensions, ou il commande automatiquement l'éclairage du véhicule (9, 10) à l'aide de l'unité d'exploitation (8), en particulier pour le mettre en marche et éventuellement aussi l'arrêter, également sur la base de la luminosité déterminée par le capteur d'images (2) en deux dimensions.
